**Europäisches Patentamt**

**European Patent Office**

**Office européen des brevets**

(19)

(11) Veröffentlichungsnummer : **0 571 425 B1**

(12)

# EUROPÄISCHE PATENTSCHRIFT

(45) Veröffentlichungstag der Patentschrift :
**12.04.95 Patentblatt 95/15**

(51) Int. Cl.⁶ : **G01B 11/02,** G01B 11/00

(21) Anmeldenummer : **92903992.3**

(22) Anmeldetag : **11.02.92**

(86) Internationale Anmeldenummer :
**PCT/DE92/00101**

(87) Internationale Veröffentlichungsnummer :
**WO 92/14117 20.08.92 Gazette 92/22**

(54) **Verfahren zur Lagebestimmung eines Positionierkörpers relativ zu einem Bezugskörper und Vorrichtungen zur Durchführung der Verfahren.**

(30) Priorität : **12.02.91 DE 4104602**

(43) Veröffentlichungstag der Anmeldung :
**01.12.93 Patentblatt 93/48**

(45) Bekanntmachung des Hinweises auf die
Patenterteilung :
**12.04.95 Patentblatt 95/15**

(84) Benannte Vertragsstaaten :
**AT BE CH DE FR GB IT**

(56) Entgegenhaltungen :
**EP-A- 0 135 673
EP-A- 0 163 347
DE-A- 3 840 726**

(56) Entgegenhaltungen :
**Applied Optics, Bd. 30, Nr. 11, 10. April 1991,
New York, US, Seiten 1355-1360; F.M. Depasse
et al. : "Modeling of the field transfer through
thick dielectric lines: use in linewidth measurement"**

(73) Patentinhaber : **E.M.S. TECHNIK GMBH
Sägemühlenstrasse 89
D-26789 Leer (DE)**

(72) Erfinder : **KELLNER, Helmut
Auf der Kave 50
D-2956 Moormerland (DE)**

(74) Vertreter : **Patentanwälte Thömen & Körner
Zeppelinstrasse 5
D-30175 Hannover (DE)**

## Beschreibung

Die Erfindung betrifft Verfahren zur Lagebestimmung eines Positionierkörpers relativ zu einem Bezugskörper nach den Oberbegriffen des Patentanspruchs 1 und des nebengeordneten Patentanspruchs 3 und Vorrichtungen zur Durchführung des jeweiligen Verfahrens.

Solche Verfahren dienen z. B. dazu, bei der Steuerung von Meß- und Fertigungsmaschinen Wegstrecken zwischen längsverschieblichen Gegenständen, wie Meßköpfen, Greif- oder Montagearmen zu erfassen. Dabei ist die Genauigkeit, mit der diese Wegstrecken ermittelt werden können, von ausschlaggebender Bedeutung für die Fertigungsgenauigkeit des Automaten.

Aus der DE-OS 39 09 856 ist bereits ein Verfahren bekannt, das eine hohe Meßgenauigkeit unabhängig von einer exakten Führung des Abtasters ermöglicht. Dabei werden von einem Abtaster drei Marken eines Maßstabes ausgewertet. Bei zwei Marken wäre der zwischen einem Projektionszentrum und diesen Marken gebildete Projektionswinkel noch davon abhängig, in welchem Abstand sich das Projektionszentrum über den Marken befindet und wie weit er seitlich versetzt ist. Bei drei Marken gelingt es, über den weiteren projektionswinkel zwischen dem Projektionszentrum, dieser weiteren Marke und einer der anderen Marken das Projektionszentrum exakt zu bestimmen. Für eine Kombination von zwei Kombinationswinkeln existiert nämlich nur ein einziger Ort, auf dem sich das Projektionszentrum befinden kann.

Weiterhin ist aus dem Buch von G. Konecny und G. Lehmann: Photogrammetrie, 4. Auflage, de Gruyter, Berlin - New York, 1984, S. 48 - 55 für sich bekannt, zur Koordinatenbestimmung eine projektive Verwandtschaft auszunutzen und einen Neigungswinkel zwischen einer projektionsfläche und einer Urbildebene zu berücksichtigen.

Der Erfindung liegt die Aufgabe zugrunde, außer Messungen der Lage eines positionierkörpers gegenüber einem Bezugskörper in Richtung einer Maßstabsachse und senkrecht dazu auch den Neigungswinkel zwischen dem Positionierkörper und dem Bezugskörper zu erfassen.

Diese Aufgabe wird bei dem im Oberbegriff des Anspruch 1 und dem Oberbegriff des nebengeordneten Anspruchs 3 beschriebenen Verfahren durch die im Kennzeichen jeweils angegebenen Merkmale sowie durch die Vorrichtungen zur Durchführung des jeweiligen Verfahrens nach den Ansprüchen 11 und 12 gelöst.

Bei einer ersten Alternative wird zuerst die Koordinate in Längsrichtung des Maßstabes und danach die Koordinate, die den Abstand vom Maßstab angibt, bestimmt. Anschließend werden diese Größen in Verbindung mit der Kammerkonstanten, d. h. dem Abstand zwischen dem Projektionszentrum und der Projektionsfläche des Abtasters sowie dem Lotfußpunkt des Projektionszentrums auf der Projektionsfläche ausgewertet, woraus sich schließlich der Neigungswinkel ergibt.

Mit der konkret angegebenen Berechnungsformel läßt sich der Neigungswinkel in einfacher Weise berechnen, so daß man für die Bestimmung von drei Freiheitsgraden mit einem einzigen Abtaster auskommt.

Eine zweite Alternative ist im nebengeordneten Anspruch 3 angegeben. Diese Alternative beruht auf der Methode der projektiven Verwandtschaft zwischen den auf dem Maßstab angeordneten Marken und der auf der Projektionsebene des Abtasters abgebildeten Marken.

Zur Berechnung ist wie auch bei der ersten Alternative die Abbildung von wenigstens drei Marken notwendig. In diesem Fall erhält man drei lineare Gleichungen mit drei Unbekannten. Bei Erfassung von mehr als drei Marken kann die Bestimmung der Transformationskonstanten durch Ausgleichsrechnung erfolgen. Damit wird die Genauigkeit wesentlich erhöht.

Eine Weiterbildung sieht vor, daß zwei in einer Ebene angeordnete Maßstäbe vorgesehen sind und jedem dieser Maßstäbe ein Abtaster zugeordnet ist.

Zusätzlich zu einer Ausbildung mit nur einem Maßstab und einem Abtaster kann hierbei auch ein Drehwinkel senkrecht und einer parallel zur Ebene ermittelt werden, in der die Maßstäbe liegen. Diese Ermittlung geschieht jeweils durch Differenzbildung der Koordinaten in Längsrichtung des Maßstabs bzw. im Abstand des Maßstabes unter Berücksichtigung der gegenseitigen Abstände der Projektionszentren.

Bei einer anderen Ausführung ist vorgesehen, daß die Maßstäbe unter einen Winkel von vorzugsweise 90° am Positionierkörper oder Bezugskörper angeordnet sind und beiden Maßstäben ebenfalls je ein Abtaster zugeordnet ist.

Diese Ausgestaltung ermöglicht es, Koordinaten in drei Koordinatenrichtungen zu erfassen und zwei Drehwinkel anzugeben.

Schließlich sieht eine Kombination vor, daß zwei parallele Maßstäbe in einer Ebene und ein weiterer Maßstab in einem Winkel zu dieser Ebene angeordnet ist. Auch diesen drei Maßstäben sind jeweils Abtaster zugeordnet.

Bei dieser Anordnung ist es möglich, sowohl alle drei Koordinatenrichtungen als auch alle Drehwinkel um diese Koordinatenrichtungen anzugeben. Dadurch läßt sich die Raumlage eines Positonierkörpes relativ zu einem Bezugskörper in allen sechs Freiheitsgraden exakt angeben.

Hinsichtlich der Ausführung der Maßstäbe sind zwei Alternativen möglich. Bei einer ersten Alternative sind die Maßstäbe als Inkrementalmaßstäbe ausgebildet. Eine Grobbestimmung der in Maßstabsrichtung weisenden Koordinate erfolgt durch einen Markenzähler.

Eine zweite Alternative sieht vor, daß die Maßstäbe als Absolutmaßstäbe ausgebildet sind. In diesem Fall erfolgt eine Grobbestimmung der in Maßstabsrichtung weisenden Koordinate durch einen Dekoder. Der Dekoder decodiert die in den Marken verschlüsselt enthaltenen Koordinatenwerte, so daß einer Zählung der passierten Marken nicht bedarf.

Weiterbildung und vorteilhafte Ausgestaltungen von Verfahren und Vorrichtung ergeben sich aus den Ansprüchen, der weiteren Beschreibung und der Zeichnung, an Hand der die Erfindung näher beschrieben wird.

In der Zeichnung zeigen:

Fig. 1 eine schematische Seitenansicht eines Abtasters über einem Maßstab,

Fig. 2 eine geometrische Darstellung der Projektionswinkel zur Erläuterung der Berechnungsformeln für die Koordinaten in Längsrichtung und im Abstand vom Maßstab,

Fig. 3 eine weitere geometrische Darstellung zur Erläuterung der Berechnungsformeln zur Bestimmung des Neigungswinkels,

Fig. 4 ein Koordinatensystem zur Definition der verwendeten Bezeichnungen und Parameter,

Fig. 5 eine schematische Seitenansicht zweier Abtaster über einem Maßstab,

Fig. 6 eine schematische Draufsicht auf zwei Abtaster über zwei Maßstäben,

Fig. 7 eine perspektivische Ansicht eines Positionierkörpers mit Maßstäben und Abtastern zur Erfassung aller räumlichen Parameter.

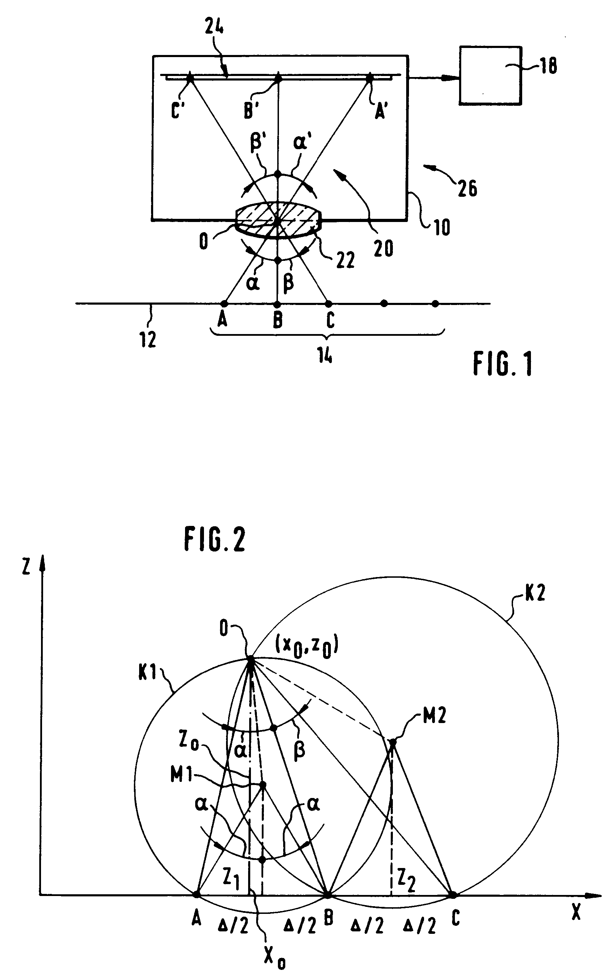

Fig. 1 zeigt einen Abtaster 10 in schematischer Darstellung in Seitenansicht. Dieser umfaßt einen Maßstab 12 mit Marken 14, von denen einzelne Marken hier mit A, B und C bezeichnet sind. Handelt es sich bei dem Maßstab 12 um einen Inkrementalmaßstab, so kann eine grobe Ermittlung der Koordinaten in Längsrichtung des Maßstabes durch Zählen der Marken 14 erfolgen. Bei einer anderen Alternative, bei der ein Absolutmaßstab verwendet wird, beinhalten die Marken durch Kodierung bereits die vollständige grobe Koordinateninformation in Längsrichtung des Maßstabes. Diese Kodierung kann z. B. durch unterschiedliche Strichstärken, gegebenenfalls in Verbindung mit einer binären Darstellungsweise, vorgenommen werden.

Der Abtaster 10 ist als optischer Abtaster ausgebildet und umfaßt eine Abbildungsoptik 22 mit einer Projektionsfläche 24 sowie einer Meßeinrichtung 26. Bei diesem Abtaster 10 ist ein Projektionszentrum O durch das Projektionszentrum der Abbildungsoptik 22 gebildet. Die Projektionsfläche 24 ist durch ein Diodenarray, z. B. in Gestalt einer CCD-Zeile gebildet. Die Anzahl der Pixel ist so gewählt, daß im Falle eines Absolutmaßstabs die Marken 14 in ihrer Breite aufgelöst werden können und mit Hilfe eines Rechners 18 dekodierbar sind.

Zur Berechnung der Koordinaten in Längsrichtung und im Abstand des Maßstabs 12 werden hier die Marken A, B und C ausgewertet, welche zum Projektionszentrum O die Winkel $\alpha$ bzw. $\beta$ einnehmen. Diese Marken werden unter dem Winkel $\alpha'$ und $\beta'$ auf die Punkte A', B' und C' der Projektionsfläche 24 abgebildet. Ist die Projektionsfläche 24 eine CCD-Zeile, so werden an den Stellen, an denen die Marken auf dieser Zeile abgebildet werden, Ladungsänderungen bewirkt, die nach seriellem Auslesen registriert und von dem Rechner 18 in entsprechende Winkelwerte $\alpha$ und $\beta$ umgerechnet werden können. Aus den Projektionswinkeln $\alpha$ und $\beta$ lassen sich unter Anwendung trigonometrischer Funktionen die Koordinaten des Projektionszentrums O ermitteln.

Zur Erläuterung der Rechenschritte wird auf Fig. 2 Bezug genommen, in der sich die weitere Betrachtung auf die Marken A, B und C und das Projektionszentrum O beschränkt. In diesem Fall befindet sich das Projektionszentrum O nicht direkt über der Marke B, um hier auch zeichnerisch zu veranschaulichen, daß jede beliebige Position des Projektionszentrums O bestimmt werden kann.

Zwischen dem Projektionszentrum O und den Marken A und B ist der Projektionswinkel $\alpha$ und zwischen dem Projektionszentrum O und den Marken B und C ist der Projektionswinkel $\beta$ eingeschlossen. Die Abstände der Marken A, B und C betragen jeweils $\Delta$. Betrachtet man einmal die Winkel $\alpha$ und $\beta$ für sich, so gibt es verschiedene Punkte, die den gleichen Projektionswinkel $\alpha$ und $\beta$ einnehmen. Diese Punkte befinden sich auf einer Ortskurve, die für den Winkel $\alpha$ durch einen Kreis K 1 und für den Winkel $\beta$ durch einen Kreis K 2 dargestellt sind. Kombiniert man die beiden Winkel $\alpha$ und $\beta$, so gibt es nur einen realen Punkt, bei dem die Bedingung erfüllt ist.

Dieser Punkt ist durch die Schnittpunkte der beiden Ortskurven, also der Kreise K 1 und K 2, angegeben. Die Mittelpunkte M 1 und M 2 der Kreise K 1 und K 2 lassen sich so bestimmten, daß die Mittelsenkrechten zwischen den Marken A und B einerseits und B und C andererseits bestimmt werden und hier die Schnittpunkte mit Linien erhalten werden können, welche jeweils unter dem Projektionswinkel, also $\alpha$ oder $\beta$, durch die Marken A und B bzw. B und C laufen.

Für die Abstände der Mittelpunkte M 1 und M 2 von der Maßstabsachse, also die Z-Koordinate der Mittelpunkte M 1 und M 2 ergeben sich:

$$Z1 \; = \; \frac{\Delta}{2 \, * \, \tan \alpha} \; \text{und} \; Z2 \; = \; \frac{\Delta}{2 \, * \, \tan \beta}$$

Durch mathematische Ableitungen ergeben sich für:

$$X_0 \; = \; \frac{\Delta \, * \, (Z1^2 \, - \, Z2^2)}{(Z1 \, - \, Z2)^2 \, + \, \Delta^2}$$

und für

$$Z_0 \; = \; \frac{\Delta^2 \, * \, (Z1 \, - \, Z2)}{(Z1 \, - \, Z2)^2 \, + \, \Delta^2}$$

Diese Gleichungen führen also zu einer eindeutigen Lösung und lassen sich mit üblichen Rechnern innerhalb kürzester Zeit bestimmen. Sie gelten bei mehreren Abtastern A 1, A 2, A 3 für alle Abtaster. Um nachfolgend einen Bezug zu dem jeweiligen Abtaster herstellen zu können, sind die Größen in den Gleichungen zusätzlich mit Indizes versehen, die der Ordnungszahl der Abtaster entsprechen. Bei drei Abtastern werden also die Indizes 1, 2 und 3 vergeben.

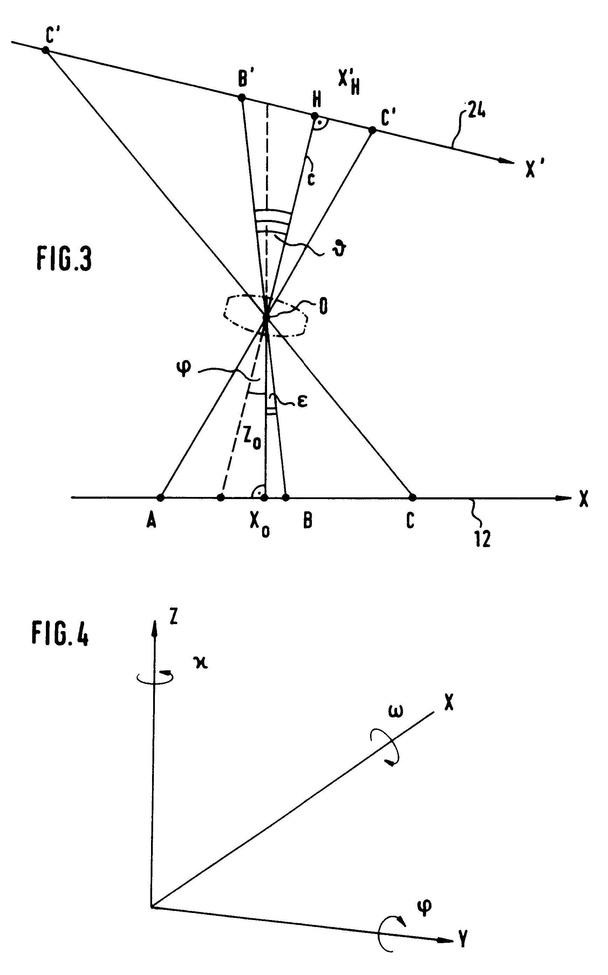

An Hand der Darstellung in Fig. 3 wird nun die Berechnung des Neigungswinkels $\rho$ erläutert. Dort ist die Projektionsfläche 24 gegenüber der Ebene des Maßstabs 12 geneigt. Wiederum befinden sich auf dem Maßstab 12 die Marken A, B und C und die auf der Projektionsfläche 24 abgebildeten Marken tragen die Bezeichnungen A′, B′ und C′. Der Abstand zwischen dem Projektionszentrum O und der Projektionsfläche 24 ist mit c bezeichnet, wobei hier der kürzeste Abstand zum Hauptpunkt H eingezeichnet ist. Außerdem sind noch die Drehwinkel $\rho$ zwischen dem Lot des Projektionszentrums O auf den Maßstab 12 und dem Lot des Projektionszentrums O auf die Projektionsebene 24, $\epsilon$ zwischen dem Lot des Projektionszentrums O auf den Maßstab 12 und der Verbindung zwischen dem Projektionszentrum O und der Marke B sowie $\nu$ zwischen dem Lot des Projektionszentrums O auf die Projektionsfläche 24 und der Verbindung zwischen dem Projektionszentrum O und der projizierten Marke B′ dargestellt. Daraus ergibt sich für den Drehwinkel $\epsilon$:

$$\epsilon \; = \; \arctan \frac{X_{Mi} \, - \, X_{0i}}{Z_{0i}}$$

und für den Drehwinkel $\nu$:

$$\nu \; = \; \arctan \frac{X'_{Mi} \, - \, X'_H}{c}$$

Außerdem ist $\rho = \nu - \epsilon$

Eine andere Berechnungsmethode beruht auf der projektiven Verwandtschaft zwischen Maßstabsebene und Projektionsebene, die folgende mathematische Form besitzt:

$$X'_M \; = \; \frac{a_1 \, * \, X_M \, + \, a_2}{a_3 \, * \, X_M \, + \, 1}$$

Daran bedeutet X′ die Bildkoordinaten auf der Projektionsfläche 24, verkörpert durch die Pixeladressen einer CCD-Zeile und X die Koordinaten der Maßstabsmarken M. Die Größen $a_1$, $a_2$ und $a_3$ bilden die Transformationskonstanten, die sich mathematisch wie folgt angeben lassen:

$$a_1 \; = \; \frac{c}{Z_0 \, - \, X_0 \, * \, \tan \rho}$$

$$a_2 \; = \; - \, \frac{c}{Z_0 \, - \, X_0 \, * \, \tan \rho} \, * \, (X_0 \, + \, Z_0 \, * \, \tan \rho)$$

$$a_3 \; = \; \tan \rho \, * \, \frac{1}{Z_0 \, - \, X_0 \, * \, \tan \rho}$$

Um die drei Transformationskonstanten eindeutig angeben zu können, ist die Auswertung dreier Marken erforderlich.

Man erhält dann ein Gleichungssystem aus drei Gleichungen mit drei Unbekannten, das nach Lösung eine eindeutige Angabe der Transformationskonstanten ermöglicht. Aus diesen Gleichungen erhält man zunächst den Drehwinkel $\rho$ als:

$$\rho \; = \; \arctan \left( c \, * \, \frac{a_3}{a_1} \right),$$

die Koordinate $X_0$ als:

$$X_0 \; = \; - \, \frac{a_2 \, + \, c \, * \, \tan \rho}{a_1 \, * \, (1 \, + \, \tan^2 \rho)}$$

und die Koordinate $Z_0$ als:

$$Z_0 \; = \; \frac{c}{a_1} \, + \, X_0 \, * \, \tan \rho$$

Beide Verfahren zur Ermittlung der Koordinaten und des Neigungswinkels sind gleichwertig, so daß man bei vorhandenen Abtastern und Maßstäben wahlweise das eine oder andere Verfahren anwenden kann und dabei zum gleichen Ergebnis kommt.

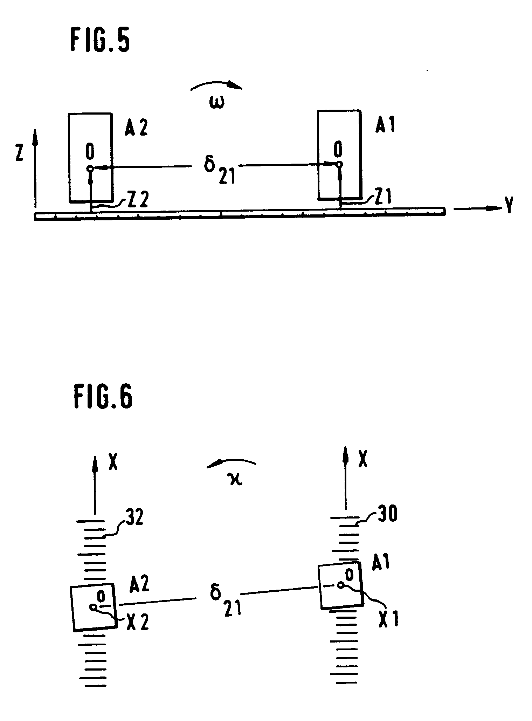

Fig. 4 zeigt ein Koordinatensystem zur Definition der verwendeten Bezeichnungen und Parameter. Die hier definierten Parameter werden auch in den Fig. 5, 6 und 7 benutzt. Es handelt sich um ein kartesisches Koordinatensystem mit den Koordinatenachsen X, Y und Z. $\rho$ bezeichnet den Drehwinkel um die Y-Achse, æ den Drehwinkel um die Z-Achse und $\omega$ den Drehwinkel um die X-Achse.

Fig. 5 zeigt eine schematische Seitenansicht zweier Abtaster A 1 und A 2 über Maßstäben 30 und 32. Die Projektionszentren $O_1$ und $O_2$ haben einen gegenseitigen Abstand $\delta$. Verläuft eine durch die Projektionszentren $O_1$ und $O_2$ führende Gerade parallel zu der Ebene, in der die Maßstäbe liegen, so sind auch die beiden Abstände der Projektionszentren gleich. Bei Abweichung kann man über die Tangens- oder Arcus-Tangens-Funktion in Verbindung mit dem Abstand $\delta$ den Drehwinkel berechnen, und zwar nach der allgemeinen Formel:

$$\omega = \arctan \frac{Z_{02} - Z_{01}}{\delta}$$

Diese Formel läßt sich sowohl für die Bestimmung des Drehwinkels æ als auch für die des Drehwinkels $\omega$ anwenden, wobei jedoch in einem Fall die Differenz der Koordinaten in Z-Richtung und im anderen Fall die Differenz der Koordinaten in X-Richtung eingesetzt werden muß. Letzterer Fall ist in Fig. 6 dargestellt.

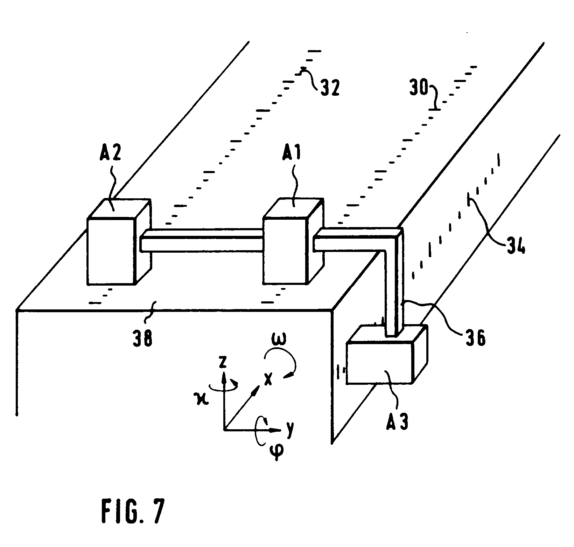

Fig. 7 zeigt einen Positionierkörper 36 mit drei Maßstäben 30, 32 und 34 und drei Abtastern A 1, A 2 und A 3 auf einen Bezugskörper 38. Ein erster 30 und zweiter Maßstab 32 befindet sich auf der Breitseite des Bezugskörpers 38. Ein dritter Maßstab 34 ist auf der Schmalseite des Bezugskörpers 38 angeordnet. Die Schmalseite und die Breitseite des Bezugskörpers 38 sind in einem Winkel von 90° ausgerichtet. Die genaue Lage des Positionierkörpers 36 gegenüber dem Bezugskörper 38 kann an Hand der von den Abtastern ermittelten Abtastwerte bestimmt werden. Zur Bestimmung der X-Richtung eignen sich im Prinzip die Daten jedes der drei Abtaster A 1, A 2, A 3. Sie stimmen hinsichtlich der X-Richtung überein, so daß das Ergebnis eines beliebigen Abtasters verwendet werden kann. Hier wird der Abtaster A 1 ausgewertet. Man erhält die X-Koordinaten nach folgender Formel:

$$X_{01} = \frac{\Delta_1 * (Z1_1{}^2 - Z2_1{}^2)}{(Z1_1 - Z2_1)^2 + \Delta_1{}^2}$$

Zur Bestimmung der Y-Richtung eignen sich die Daten des Abtasters A 3. Für diese Koordinatenrichtung gilt folgende Formel:

$$Y_{03} = \frac{\Delta_3{}^2 * (Z1_3 - Z2_3)}{(Z1_3 - Z2_3)^2 + \Delta_3{}^2}$$

Für die Bestimmung der Z-Richtung sind die Daten der Abtaster A 1 oder A 2 maßgebend.

Die Berechnungsformel für den Abtaster A 1 lautet:

$$Z_{01} = \frac{\Delta_1{}^2 * (Z1_1 + Z2_1)}{(Z1_1 - Z2_1)^2 + \Delta_1{}^2}$$

Während bei paralleler Ausrichtung von Positionierkörper und Bezugskörper die Abstände gleich sind, ergeben sich Unterschiede bei einem Drehwinkel $\omega$. Der Drehwinkel $\omega$ kann somit auf der Differenz der Abstände und dem Abstand der Abtaster gemäß folgender Formel ermittelt werden:

$$\omega = \arctan \frac{Z_{02} - Z_{01}}{\delta_{21}}$$

Die Bestimmung des Drehwinkels æ erfolgt über die Differenz der Daten der Abtaster A 1 und A 2 in X-Richtung unter Berücksichtigung ihrer gegenseitigen Abstände gemäß der Formel:

$$æ = \arctan \frac{X_{02} - X_{01}}{\delta_{21}} .$$

Schließlich wird der Drehwinkel $\rho$ wie folgt berechnet:

$$\rho = \arctan \frac{X'_{M1} - X'_{H1}}{c_1} - \arctan \frac{X_{M1} - X_{01}}{Z_{01}} .$$

Die in den angegeben Formeln beschriebene Berechnungsmethode entspricht der ersten hier beschriebenen Alternative. Es ist jedoch auch möglich die zweite Alternative, also die Berechnung nach der projektiven Verwandtschaft durchzuführen.

## Patentansprüche

1. Verfahren zur Lagebestimmung eines Positionierkörpers (36) relativ zu einem Bezugskörper (38), wobei der Positionierkörper (36) einen Maßstab (12) mit Marken (14; A, B, C) konstanten Abstandes trägt und der Bezugskörper (38) einen Abtaster (10; A1) mit einer Projektionsfläche (24), auf die die Marken (14; A, B, C) des Maßstabs (12) projiziert werden, sowie eine Abbildungsoptik (22) aufweist, bei dem die Ko-

ordinaten ($X_{01}$, $Z_{01}$) des Projektionszentrums (O) der Abbildungsoptik (22) aus den Projektionswinkeln ($\alpha$, $\beta$) zwischen dem Projektionszentrum (O) und drei auf dem Maßstab (12) angeordneter Marken (A, B, C) sowie aus dem konstanten Abstand der Marken (A, B, C) trigonometrisch berechnet werden, <u>dadurch gekennzeichnet</u>, daß zusätzlich der Neigungswinkel ($\rho$) des Positionierkörpers (36) gegenüber dem Bezugskörper (38) trigonometrisch berechnet wird über

- die ermittelten Koordinaten ($X_{01}$, $Z_{01}$) des Projektionszentrums (O),
- den Abstand (c) des Projektionszentrums (O) von der Projektionsfläche (24) des Abtasters (10; A1) und über
- die Bildkoordinaten ($X'_H$) des Lotfußpunktes (H) des Projektionszentrums (O) auf die Projektionsfläche (24).

2. Verfahren nach Anspruch 1, <u>dadurch gekennzeichnet</u>, daß die Berechnung nach folgenden trigonometrischen Funktionen und Gleichungen durchgeführt wird:

$$X_{0i} = \frac{\Delta_i * (Z1_i^2 - Z2_i^2)}{(Z1_i - Z2_i)^2 + \Delta_i^2}$$

$$Z_{0i} = \frac{\Delta_i^2 * (Z1_i + Z2_i)}{(Z1_i - Z2_i)^2 + \Delta_i^2}$$

$$\rho = \arctan \frac{X'_{Mi} - X'_H}{c} - \arctan \frac{X_{Mi} - X_{0i}}{Z_{0i}}$$

wobei der Index i im Falle mehrerer Abtaster (10; A1, A2, A3) für die Ordnungszahl des jeweiligen Abtasters steht, wobei

$$Z1_i = \frac{\Delta_i}{2 * \tan \alpha_i}$$

und

$$Z2_i = \frac{\Delta_i}{2 * \tan \beta_i}$$

sind, $\alpha$ den Projektionswinkel zwischen dem Projektionszentrum (O) sowie einer ersten und einer zweiten benachbarten Marke (A, B), $\beta$ den Projektionswinkel zwischen dem Projektionszentrum (O) und der ersten (A) oder zweiten (B) sowie einer dritten benachbarten Marke (C) bezeichnet, $\Delta$ der Abstand zwischen zwei benachbarten Marken ist, $X_{0i}$, $Z_{0i}$ die Koordinaten des Projektionszentrums (O) des durch den Index (i) angegebenen Abtasters (10; A1, A2, A3) zu dem Maßstab (12) sind, $\rho$ den Neigungswinkel der Projektionsfläche des Abtasters i gegenüber dem Maßstab (12) bildet, $X'_H$ die Bildkoordinate des Lotfußpunktes des Projektionszentrums (O) auf die Projektionsfläche (24) darstellt, $X_M$ die X-Koordinate einer Marke auf dem Maßstab (12) bildet, $X'_M$ die Bildkoordinate dieser Marke auf der Projektionsfläche (24) darstellt und c die Kammerkonstante, nämlich der Abstand zwischen der Projektionsfläche (24) des Abtasters (10; A1, A2, A3) und dem Projektionszentrum (O) ist.

3. Verfahren zur Lagebestimmung eines Positionierkörpers (36) relativ zu einem Bezugskörper, wobei der Positionierkörper (36) einen Maßstab (12) mit Marken (14; A, B, C) konstanten Abstandes trägt und der Bezugskörper (38) einen Abtaster (10; A1) mit einer Projektionsfläche (24), auf die die Marken (14; A, B, C) des Maßstabs (12) projiziert werden, sowie eine Abbildungsoptik (22) aufweist, bei dem die Koordinaten ($X_{01}$, $Z_{01}$) des Projektionszentrums (O) der Abbildungsoptik (22) über eine Auswertung wenigstens dreier auf dem Maßstab (12) angeordneter Marken (A, B, C) berechnet, <u>dadurch gekennzeichnet</u>, daß zusätzlich der Neigungswinkel ($\rho$) des Positionierkörpers (36) gegenüber dem Bezugskörper (38) berechnet wird und die Berechnungen über die projektive Verwandtschaft zwischen der Projektionsebene (24) des Abtasters (10; A1) und der Maßstabsebene (12) erfolgen.

4. Verfahren nach Anspruch 3, <u>dadurch gekennzeichnet</u>, daß die Berechnung nach folgenden Funktionen und Gleichungen durchgeführt wird:

$$\rho = \arctan \left( c * \frac{a_3}{a_1} \right)$$

$$X_{0i} = - \frac{a_2 + c * \tan \rho}{a_1 * (1 + \tan^2 \rho)}$$

$$Z_{0i} = \frac{c}{a_1} + X_0 * \tan \rho$$

wobei der Index i im Falle mehrerer Abtaster (10; A1, A2, A3) für die Ordnungszahl des jeweiligen Abtasters steht, $X_{0i}$, $Z_{0i}$ die Koordinaten des Projektionszentrums (O) des durch den Index (i) angegebenen Abtasters (A1, A2, A3) zu dem Maßstab (12) sind, $\rho$ den Neigungswinkel der Projektionsfläche (24) des Abtasters i gegenüber dem Maßstab (12) bildet und $a_1$, $a_2$ und $a_3$ Transformationskonstanten darstellen, die aus der Abbildung wenigstens dreier Marken $X_{M1}$, $X_{M2}$ und $X_{M3}$ des Maßstabes (12) auf einer Projektionsfläche (24) des Abtasters in der Form $X'_{M1}$, $X'_{M2}$ und $X'_{M3}$ durch Lösung des Gleichungssystems:

$$X'_{Mj} = \frac{a_1 \ast X_{Mj} + a_2}{a_3 \ast X_{Mj} + 1}$$

errechnet werden, wobei j für die Ordnungszahl der auf dem Abtaster (A1, A2, A3) angeordneten Marken steht, deren Koordinaten in das Gleichungssystem eingesetzt werden und c die Kammerkonstante, nämlich der Abstand zwischen der Projektionsfläche (24) des Abtasters und dem Projektionszentrum (O) ist.

5. Verfahren nach einem der Ansprüche 1 bis 4, <u>dadurch gekennzeichnet</u>, daß auf dem Positionierkörper (36) oder dem Bezugskörper (38) zwei parallele Maßstäbe (30, 32), die in einer Ebene liegen, von den Maßstäben zugeordneten Abtastern (A1, A2) abgetastet werden.

6. Verfahren nach einem der Ansprüche 1 bis 4, <u>dadurch gekennzeichnet</u>, daß auf dem Positionierkörper (36) oder dem Bezugskörper (38) zwei unter einem Winkel von vorzugsweise 90° stehende Maßstäbe (30, 34) von den Maßstäben zugeordneten Abtastern (A1, A3) abgetastet werden.

7. Verfahren nach einem der Ansprüche 1 bis 4, <u>dadurch gekennzeichnet</u>, daß auf dem Positionierkörper (36) oder dem Bezugskörper (38) drei Maßstäbe (30, 32, 34), von denen zwei (30, 32) in einer Ebene liegen und ein dritter (34) in einem Winkel von vorzugsweise 90° zu den beiden anderen Maßstäben (30, 32) ausgerichtet ist, von den Maßstäben zugeordneten Abtastern (A1, A2, A3) abgetastet werden.

8. Verfahren nach Anspruch 7, <u>dadurch gekennzeichnet</u>, daß die Berechnung der Koordinaten sowie der Drehwinkel des Positionierkörpers (36) gegenüber dem Bezugskörper (38) nach folgenden Funktionen und Gleichungen durchgeführt wird:

$$X_{01} = \frac{\Delta_1 \ast (Z1_1{}^2 - Z2_1{}^2)}{(Z1_1 - Z2_1)^2 + \Delta_1{}^2}$$

$$X_{02} = \frac{\Delta_2 \ast (Z1_2{}^2 - Z2_2{}^2)}{(Z1_2 - Z2_2)^2 + \Delta_2{}^2}$$

$$Y_{03} = \frac{\Delta_3{}^2 \ast (Z1_3 + Z2_3)}{(Z1_3 - Z2_3)^2 + \Delta_3{}^2}$$

$$Z_{01} = \frac{\Delta_1{}^2 \ast (Z1_1 + Z2_1)}{(Z1_1 - Z2_1)^2 + \Delta_1{}^2}$$

$$Z_{02} = \frac{\Delta_2{}^2 \ast (Z1_2 + Z2_2)}{(Z1_2 - Z2_2)^2 + \Delta_2{}^2}$$

$$\rho = \arctan \frac{X'_{Mi1} - X'_{H1}}{c_1} - \arctan \frac{X_{Mi1} - X_{01}}{Z_{01}}$$

$$\text{æ} = \arctan \frac{X'_{Mi3} - X'_{H3}}{c_3} - \arctan \frac{X_{Mi3} - X_{03}}{Z_{03}}$$

oder

$$\text{æ} = \arctan \frac{X_{02} - X_{01}}{\delta_{21}}$$

$$\omega = \arctan \frac{Z_{02} - Z_{01}}{\delta_{21}}$$

wobei die Indizes 1, 2, 3 für den ersten, zweiten und dritten Abtaster stehen, wobei

$$Z1_{1\ldots3} = \frac{\Delta_{1\ldots3}}{2 \ast \tan \alpha_{1\ldots3}}$$

und

$$Z2_{1\ldots3} = \frac{\Delta_{1\ldots3}}{2 \ast \tan \beta_{1\ldots3}}$$

sind, $\alpha$ den Projektionswinkel zwischen dem Projektionszentrum (O) sowie einer ersten und einer zweiten benachbarten Marke (A, B), $\beta$ den Projektionswinkel zwischen dem Projektionszentrum (O) und der ersten (A) oder zweiten (B) sowie einer dritten benachbarten Marke (C) bezeichnet, $\Delta$ der Abstand zwischen zwei benachbarten Marken ist, $X_{01}$, $X_{02}$, $Y_{03}$, $Z_{01}$ und $Z_{02}$ die Koordinaten der Projektionszentren (O) der durch die Indizes angegebenen Abtaster relativ zu den Maßstäben sind, $\rho$ den Drehwinkel um die Y-Achse, $\text{æ}$ den Drehwinkel um die Z-Achse, $\omega$ den Drehwinkel um die X-Achse darstellen und $\delta$ den Abstand zwischen

den Projektionszentren (O) der durch die Indizes angegebenen Abtaster bildet.

9. Verfahren nach einem der Ansprüche 1 bis 8, <u>dadurch gekennzeichnet</u>, daß eine Grobbestimmung der in Maßstabsrichtung weisenden Koordinate bei einer Ausbildung als Inkrementalmaßstab durch Zählen der passierten Marken vorgenommen wird.

10. Verfahren nach einem der Ansprüche 1 bis 8, <u>dadurch gekennzeichnet</u>, daß eine Grobbestimmung der in Maßstabsrichtung weisenden Koordinate bei einer Ausbildung als Absolutmaßstab durch Dekodieren der in den Marken verschlüsselt enthaltenen Koordinatenwerte vorgenommen wird.

11. Vorrichtung zur Durchführung des Verfahrens nach Patentanspruch 1, wobei ein Positionierkörper (36) einen Maßstab (12) mit Marken (14; A, B, C) konstanten Abstandes trägt und ein Bezugskörper (38) einen Abtaster (10; A1) mit einer Projektionsfläche (24), auf die die Marken (14; A, B, C) des Maßstabs (12) projizierbar sind, sowie eine Abbildungsoptik (22) aufweist, bei dem die Koordinaten $(X_{01}, Z_{01})$ des Projektionszentrums (O) der Abbildungsoptik (22) aus den Projektionswinkeln $(\alpha, \beta)$ zwischen dem Projektionszentrum (O) und drei auf dem Maßstab (12) angeordneter Marken (A, B, C) sowie aus dem konstanten Abstand der Marken (A, B, C) trigonometrisch berechenbar sind, <u>dadurch gekennzeichnet</u>, daß der Abtaster (10; A 1) mit einem Rechner (18) verbunden ist, daß dem Abtaster (10; A 1) eine Meßvorrichtung (26) zugeordnet ist, mittels der die Projektionswinkel $(\alpha, \beta)$ zwischen dem Projektionszentrum (O) und drei auf dem Maßstab angeordneter Marken (A, B, C) bestimmt werden und daß der Rechner (18) so gesteuert ist, daß er die Koordinaten des Projektionszentrums (O) aus den Projektionswinkeln $(\alpha, \beta)$ zwischen dem Projektionszentrum und drei auf dem Maßstab angeordneter Marken sowie aus dem konstanten Abstand der Marken und zusätzlich den Neigungswinkel $\rho$ des Positionierkörpers (36) gegenüber dem Bezugskörper (38) trigonometrisch berechnet über
   - die ermittelten Koordinaten $(X_{01}, Z_{01})$ des Projektionszentrums(O),
   - den Abstand c des Projektionszentrums (O) von der Projektionsfläche (24) des Abtasters (10; A 1) und über
   - die Bildkoordinaten $(X'_H)$, des Lotfußpunktes (H) des Projektionszentrums (O) auf die Projektionsfläche (24).

12. Vorrichtung zur Durchführung des Verfahrens nach Patentanspruch 3, wobei ein Positionierkörper (36) einen Maßstab (12) mit Marken (14; A, B, C) konstanten Abstandes trägt und ein Bezugskörper (38) einen Abtaster (10; A1) mit einer Projektionsfläche (24), auf die die Marken (14; A, B, C) des Maßstabs (12) projizierbar sind, sowie eine Abbildungsoptik (22) aufweist, bei dem die Koordinaten $(X_{01}, Z_{01})$ des Projektionszentrums (O) der Abbildungsoptik (22) über eine Auswertung wenigstens dreier auf dem Maßstab (12) angeordneter Marken (A, B, C) berechenbar sind, <u>dadurch gekennzeichnet</u>, daß der Abtaster (10; A 1) mit einem Rechner (18) verbunden ist und der so gesteuert ist, daß zusätzlich der Neigungswinkel $\rho$ des Positionierkörpers (36) gegenüber dem Bezugskörper (38) berechnet wird und die Berechnungen über die projektive Verwandtschaft zwischen der Projektionsebene (24) des Abtasters (10; A 1) und der Maßstabsebene erfolgen.

13. Vorrichtung nach Anspruch 11 oder 12, <u>dadurch gekennzeichnet</u>, daß auf dem Positionierkörper (36) oder dem Bezugskörper (38) zwei parallele Maßstäbe (30, 32) angeordnet sind, die in einer Ebene liegen, und daß jedem Maßstab (30, 32) ein Abtaster (A 1, A 2) zugeordnet ist.

14. Vorrichtung nach Anspruch 11 oder 12, <u>dadurch gekennzeichnet</u>, daß auf dem Positionierkörper (36) oder dem Bezugskörper (38) zwei unter einem Winkel von vorzugsweise 90° stehende Maßstäbe (30, 34) angeordnet sind und daß jedem Maßstab (30, 34) ein Abtaster (A 1, A 3) zugeordnet ist.

15. Vorrichtung nach Anspruch 11 oder 12, <u>dadurch gekennzeichnet</u>, daß auf dem Positionierkörper (36) oder dem Bezugskörper (38) drei Maßstäbe (30, 32, 34) angeordnet sind, von denen zwei (30, 32) in einer Ebene liegen und ein dritter (34) in einem Winkel von vorzugsweise 90° zu den beiden anderen Maßstäben (30, 32) ausgerichtet ist und daß jedem Maßstab (30, 32, 34) ein Abtaster (A 1, A 2, A 3) zugeordnet ist.

16. Vorrichtung nach einem der Ansprüche 11 bis 15, <u>dadurch gekennzeichnet</u>, daß die Maßstäbe (30, 32, 34) als Inkrementalmaßstäbe ausgebildet sind und eine Grobbestimmung der in Maßstabsrichtung weisenden Koordinate durch einen Markenzähler erfolgt.

17. Vorrichtung nach einem der Ansprüche 11 bis 16, <u>dadurch gekennzeichnet</u>, daß die Maßstäbe (30, 32, 34) als Absolutmaßstäbe ausgebildet sind und eine Grobbestimmung der in Maßstabsrichtung weisenden Koordinate durch einen Dekoder erfolgt, der die in den Marken verschlüsselt enthaltenen Koordinatenwerte dekodiert.

**Claims**

1. Method of determining the position of a position-control element (36) relative to a reference body (38), wherein the position-control element (36) carries a scale (12) having marks (14; A, B, C) at constant spacing and the reference body (38) comprises a scanner (10; A1) having a projection surface (24), onto which the marks (14; A, B, C) of the scale (12) are projected, and comprises also an imaging optic (22), in which the coordinates $(X_{01}, Z_{01})$ of the projection centre (O) of the imaging optic (22) are trigonometrically calculated from the projection angles $(\alpha, \beta)$ between the projection centre (O) and three marks (A, B, C) disposed on the scale (12) and also from the constant spacing of the marks (A, B, C), characterized in that, in addition, the angle of inclination $(\rho)$ of the position-control element (36) relative to the reference body (38) is trigonometrically calculated from
   - the ascertained coordinates $(X_{01}, Z_{01})$ of the projection centre (O),
   - the distance (c) of the projection centre (O) from the projection surface (24) of the scanner (10; A1) and from
   - the image coordinates $(X'_H)$ of the perpendicular projection point (H) of the projection centre (O) onto the projection surface (24).

2. Method according to Claim 1, characterized in that the calculation is performed by the following trigonometrical functions and equations:

$$X_{0i} = \frac{\Delta_i * (Z1_i^2 - Z2_i^2)}{(Z1_i - Z2_i)^2 + \Delta_i^2}$$

$$Z_{0i} = \frac{\Delta_i^2 * (Z1_i + Z2_i)}{(Z1_i - Z2_i)^2 + \Delta_i^2}$$

$$\rho = \tan^{-1}\frac{X'_{Mi} - X'_H}{c} - \tan^{-1}\frac{X_{Mi} - X_{0i}}{Z_{0i}}$$

where the index i in the case of several scanners (10; A1, A2, A3) stands for the order number of the relevant scanner,
where

$$Z1_i = \frac{\Delta_i}{2 * \tan \alpha_i}$$

and

$$Z2_i = \frac{\Delta_i}{2 * \tan \beta_i}$$

$\alpha$ denotes the projection angle between the projection centre (O) and a first and a second adjacent mark (A, B), $\beta$ denotes the projection angle between the projection centre (O) and the first (A) or second (B) and a third adjacent mark (C), $\Delta$ is the distance between two adjacent marks, $X_{0i}, Z_{0i}$ are the coordinates of the projection centre (O) of the scanner (10; A1, A2, A3) given by the index (i) on the scale (12), $\rho$ is the angle of inclination of the projection surface of the scanner i relative to the scale (12) $X'_H$ denotes the image coordinate of the perpendicular projection point of the projection centre (O) on the projection surface (24), $X_M$ forms the X-coordinate of a mark on the scale (12), $X'_M$ denotes the image coordinate of this mark on the projection surface (24) and c is the chamber constant, namely the distance between the projection surface (24) of the scanner (10; A1, A2, A3) and the projection centre (O).

3. Method of determining the position of a position-control element (36) relative to a reference body, wherein the position-control element (36) carries a scale (12) having marks (14; A, B, C) at constant spacing and the reference body (38) comprises a scanner (10; A1) having a projection surface (24) onto which the marks (14; A, B, C) of the scale (12) are projected, and comprises also an imaging optic (22), in which the coordinates $(X_{01}, Z_{01})$ of the projection centre (O) of the imaging optic (22) are calculated from an evaluation of at least three marks (A, B, C) disposed on the scale (12), characterized in that, in addition the angle of inclination $(\rho)$ of the position-control element (36) relative to the reference body (38) is calculated and the calculations are performed through the projective relationship between the projection plane (24) of the scanner (10; A1) and the scale plane (12).

4. Method according to Claim 3, characterized in that the calculation is performed from the following functions and equations:

$$\rho = \tan^{-1}\left(c * \frac{a_3}{a_1}\right)$$

$$X_{0i} = -\frac{a_2 + c * \tan\rho}{a_1 * (1 + \tan^2\rho)}$$

$$Z_{0i} = \frac{c}{a_1} + X_0 * \tan\rho$$

where the index i, in the case of several scanners (10; A1, A2, A3) stands for the order number of the relevant scanner, $X_{0i}$, $Z_{0i}$ are the coordinates of the projection centre (O) of the scanner (A1, A2, A3) given by the index (i) on the scale (12), $\rho$ forms the angle of inclination of the projection surface (24) of the scanner i relative to the scale (12), and $a_1$, $a_2$ and $a_3$ are transformation constants, which are calculated from the imaging of at least three marks $X_{M1}$, $X_{M2}$ and $X_{M3}$ of the scale (12) on a projection surface (24) of the scanner in the form $X'_{M1}$, $X'_{M2}$ and $X'_{M3}$ by solution of the equation system:

$$X'_{Mj} = \frac{a_1 * X_{Mj} + a_2}{a_3 * X_{Mj} + 1}$$

where j stands for the order number of the marks disposed on the scanner (A1, A2, A3), the coordinates of which are inserted into the equation system and c is the chamber constant, namely the distance between the projection surface (24) of the scanner and the projection centre (O).

5. Method according to one of Claims 1 to 4, characterized in that, on the position-control element (36) or the reference body (38), two parallel scales (30, 32), which lie in one plane, are scanned by scanners (A1, A2) associated with the scales.

6. Method according to one of Claims 1 to 4, characterized in that, on the position-control element (36) or the reference body (38), two scales (30, 34) lying at an angle of preferably 90° to each other are scanned by scanners (A1, A3) associated with the scales.

7. Method according to one of Claims 1 to 4, characterized in that, on the position-control element (36) or the reference body (38), three scales (30, 32, 34), of which two (30, 32) lie in one plane and a third (34) is orientated at an angle of preferably 90° to the other two scales (30, 32), are scanned by scanners (A1, A2, A3) associated with the scales.

8. Method according to Claim 7, characterized in that the calculation of the coordinates and of the angles of rotation of the position-control element (36) relative to the reference body (38) is performed according to the following functions and equations:

$$X_{01} = \frac{\Delta_1 * (Z1_1^2 - Z2_1^2)}{(Z1_1 - Z2_1)^2 + \Delta_1^2}$$

$$X_{02} = \frac{\Delta_2 * (Z1_2^2 - Z2_2^2)}{(Z1_2 - Z2_2)^2 + \Delta_2^2}$$

$$Y_{03} = \frac{\Delta_3^2 * (Z1_3 + Z2_3)}{(Z1_3 - Z2_3)^2 + \Delta_3^2}$$

$$Z_{01} = \frac{\Delta_1^2 * (Z1_1 + Z2_1)}{(Z1_1 - Z2_1)^2 + \Delta_1^2}$$

$$Z_{02} = \frac{\Delta_2^2 * (Z1_2 + Z2_2)}{(Z1_2 - Z2_2)^2 + \Delta_2^2}$$

$$\rho = \tan^{-1}\frac{X'_{Mi1} - X'_{H1}}{c_1} - \tan^{-1}\frac{X_{Mi1} - X_{01}}{Z_{01}}$$

$$\text{æ} = \tan^{-1}\frac{X'_{Mi3} - X'_{H3}}{c_3} - \tan^{-1}\frac{X_{Mi3} - X_{03}}{Z_{03}}$$

or

$$\text{æ} = \tan^{-1}\frac{X_{02} - X_{01}}{\delta_{21}}$$

$$\omega = \tan^{-1}\frac{Z_{02} - Z_{01}}{\delta_{21}}$$

where the indices 1, 2, 3 stand for the first, second and third scanners, where

$$Z1_{1\ldots3} = \frac{\Delta_{1\ldots3}}{2 * \tan \alpha_{1\ldots3}}$$

and

$$Z2_{1\ldots3} = \frac{\Delta_{1\ldots3}}{2 * \tan \beta_{1\ldots3}}$$

$\alpha$ denotes the projection angle between the projection centre (O) and a first and a second adjacent mark (A, B), $\beta$ denotes the projection angle between the projection centre (O) and the first (A) or second (B) and a third adjacent mark (C), $\Delta$ is the distance between two adjacent marks, $X_{01}$, $X_{02}$, $Y_{03}$, $Z_{01}$ and $Z_{02}$ are the coordinates of the projection centres (O) of the scanners denoted by the indices relative to the scales, $\rho$ denotes the angle of rotation about the Y-axis, æ denotes the angle of rotation about the Z-axis, $\omega$ denotes the angle of rotation about the X-axis and $\delta$ forms the distance between the projection centres (O) of the scanners denoted by the indices.

9. Method according to one of Claims 1 to 8, characterized in that a coarse determination of the coordinate pointing in the direction of the scale, when this is constructed as an incremental scale, is obtained by counting the marks passed.

10. Method according to one of Claims 1 to 8, characterized in that a coarse determination of the coordinate pointing in the direction of the scale, when this is constructed as an absolute scale, is obtained by decoding the coordinate values contained encoded in the marks.

11. Apparatus for carrying out the method according to Claim 1, wherein a position-control element (36) carries a scale (12) having marks (14; A, B, C) at constant spacing and a reference body (38) comprises a scanner (10; A1) having a projection surface (24), onto which the marks (14; A, B, C) of the scale (12) can be projected, and comprises an imaging optic (22), in which the coordinates ($X_{01}$, $Z_{01}$) of the projection centre (O) of the imaging optic (22) can be trigonometrically calculated from the projection angles ($\alpha$, $\beta$) between the projection centre (O) and three marks (A, B, C) disposed on the scale (12) and from the constant spacing of the marks (A, B, C), characterized in that the scanner (10; A1) is connected to a computer (18), that a measuring device (26) is associated with the scanner (10; A1), by means of which measuring device the projection angles ($\alpha$, $\beta$) between the projection centre (O) and three marks (A, B, C) disposed on the scale are determined, and that the computer (18) is so controlled that it trigonometrically calculates the coordinates of the projection centre (O) from the projection angles ($\alpha$, $\beta$) between the projection centre and three marks disposed on the scale and also from the constant spacing of the marks and additionally calculates the angle of inclination $\rho$ of the position-control element (36) relative to the reference body (38) from
   - the ascertained coordinates ($X_{01}$, $Z_{01}$) of the projection centre (O),
   - the distance (c) of the projection centre (O) from the projection surface (24) of the scanner (10; A1) and from
   - the image coordinates ($X'_H$) of the perpendicular projection point (H) of the projection centre (O) on the projection surface (24).

12. Apparatus for carrying out the method according to Claim 3, wherein a position-control element (36) carries a scale (12) having marks (14; A, B, C) at constant spacing and a reference body (38) comprises a scanner (10; A1) having a projection surface (24), onto which the marks (14; A, B, C) of the scale (12) can be projected, and comprises an imaging optic (22), in which the coordinates ($X_{01}$, $Z_{01}$) of the projection centre (O) of the imaging optic (22) can be calculated by an evaluation of at least three marks (A, B, C) disposed on the scale (12), characterized in that the scanner (10; A1) is connected to a computer (18) and the computer (18) is so controlled that in addition the angle of inclination $\rho$ of the position-control clement (36) relative to the reference body (38) is calculated and the calculations are performed from the projective relationship between the projection plane (24) of the scanner (10; A1) and the scale plane.

13. Apparatus according to Claim 11 or 12, characterized in that, on the position-control element (36) or the reference body (38), two parallel scales (30, 32) are disposed, which lie in one plane, and that a scanner (A1, A2) is associated with each scale (30, 32).

14. Apparatus according to Claim 11 or 12, characterized in that, on the position-control element (36) or the reference body (38), two scales (30, 34) at an angle of preferably 90° to each other are disposed, and that a scanner (A1, A3) is associated with each scale (30, 34).

15. Apparatus according to Claim 11 or 12, characterized in that, on the position-control element (36) or the reference body (38), three scales (30, 32, 34) are disposed, of which two (30, 32) lie in one plane and a third (34) is orientated at an angle of preferably 90° to the other two scales (30, 32) and that a scanner (A1, A2, A3) is associated with each scale (30, 32, 34).

16. Apparatus according to one of Claims 11 to 15, characterized in that the scales (30, 32, 34) are constructed as incremental scales and a coarse determination of the coordinate pointing in the direction of the scale is obtained by a mark counter.

17. Apparatus according to one of Claims 11 to 16, characterized in that the scales (30, 32, 34) are constructed as absolute scales and a coarse determination of the coordinate pointing in the direction of the scale is obtained by a decoder, which decodes the coordinate values contained encoded in the marks.

## Revendications

1. Méthode pour déterminer la position d'un corps de positionnement (36) par rapport à un corps de référence (38), le corps de positionnement (36) portant une règle graduée (12) avec des marques (14; A, B, C) à distances constantes et le corps de référence (38) comportant un analyseur (10; A1) avec une surface de projection (24) sur laquelle sont projetées les marques (14; A, B, C) de la règle graduée (12), ainsi qu'une optique de projection (22), dans lequel les coordonnées $(X_{01}, Z_{01})$ du centre de projection (O) de l'optique de projection (22) sont calculées, par trigonométrie, à partir des angles de projections $(\alpha, \beta)$ entre le centre de projection (O) et trois marques (A, B, C) sur la règle graduée (12) ainsi qu'à partir de la distance constante des marques (A, B, C), caractérisée en ce que l'angle d'inclinaison $(\rho)$ du corps de positionnement (36) par rapport au corps de référence (38) est encore calculé, par trigonométrie, par
   - les coordonnées moyennes $(X_{01}, Z_{01})$ du centre de projection (O),
   - la distance (c) du centre de projection (O) à la surface de projection (24) de l'analyseur (10; A1), et
   - les coordonnées d'image $(X'_H)$ du pied de la verticale (H) du centre de projection (O) sur la surface de projection (24).

2. Méthode suivant la revendication 1, caractérisée en ce que le calcul est effectué suivant les fonctions trigonométriques et les équations suivantes:

$$X_{0i} = \frac{\Delta_i * (Z1_i^2 - Z2_i^2)}{(Z1_i - Z2_i)^2 + \Delta_i^2}$$

$$Z_{0i} = \frac{\Delta_i^2 * (Z1_i + Z2_i)}{(Z1_1 - Z2_i)^2 + \Delta_i^2}$$

$$\rho = \text{arctg} \frac{X'_{Mi} - X'_H}{c} - \text{arctg} \frac{X_{Mi} - X_{0i}}{Z_{0i}}$$

où l'indice i correspond, dans le cas de plusieurs analyseurs (10; A1, A2, A3), au numéro d'ordre de chaque analyseur, avec

$$Z1_i = \frac{\Delta_i}{2 * \tan \alpha_i}$$

et

$$Z2_i = \frac{\Delta_i}{2 * \tan \beta_i}$$

$\alpha$ est l'angle de projection entre le centre de projection (O) et des première et seconde marques voisines (A, B), $\beta$ l'angle de projection entre le centre de projection (O) et la première marque (A) ou la seconde marque (B) et une troisième marque voisine (C), $\Delta$ la distance entre deux marques voisines, $X_{01}, Z_{01}$ les coordonnées du centre de projection (O) de l'analyseur (10; A1, A2, A3), affecté de l'indice (i) à la règle graduée (12), $\rho$ l'angle d'inclinaison de la surface de projection de l'analyseur i par rapport à la règle graduée (12), $X'_H$ la coordonnée d'image du pied de la verticale du centre de projection (O) sur la surface de projection (24), $X_H$ la coordonnée X d'une marque sur la règle graduée (12), $X'_M$ la coordonnée d'image de cette marque sur la surface de projection (24), et c la constante de chambre, c'est-à-dire la distance entre la surface de projection (24) de l'analyseur (10; A1, A2, A3) et le centre de projection (O).

3. Méthode pour déterminer la position d'un corps de positionnement (36) par rapport à un corps de référence, où le corps de positionnement (36) porte une règle graduée (12) avec des marques (14; A, B, C) à distances constantes et le corps de référence (38) présente un analyseur (10; A1) avec une surface de projection (24) sur laquelle sont projetées les marques (14; A, B, C) de la règle graduée (12), ainsi qu'une optique de projection (22) par laquelle sont calculées les coordonnées $(X_{01}, Z_{01})$ du centre de projection (O) de l'optique de projection (22) par évaluation numérique d'au moins trois marques (A, B, C) sur la règle graduée (12), caractérisée en ce qu'est encore calculé l'angle d'inclinaison ($\rho$) du corps de positionnement (36) par rapport au corps de référence (38) et sont effectués les calculs par l'affinité de projection entre le plan de projection (24) de l'analyseur (10; A1) et le plan de la règle graduée (12).

4. Méthode suivant la revendication 3, caractérisée en ce que le calcul est effectué suivant les fonctions et les équations suivantes:

$$\rho = \arctan (c * \frac{a_3}{a_1})$$

$$X_{0i} = - \frac{a_2 + c * \tan \rho}{a_1 * (1 + \tan^2 \rho)}$$

$$Z_{0i} = \frac{c}{a_1} + X_0 * \tan \rho$$

où l'indice i indique, en cas de plusieurs analyseurs (10; A1, A2, A3), le numéro d'ordre de chaque analyseur, $X_{01}, Z_{01}$ sont les coordonnées du centre de projection (O) de l'analyseur (A1, A2, A3) affecté de l'indice (i), $\rho$ est l'angle d'inclinaison de la surface de projection (24) de l'analyseur i par rapport à la règle graduée (12), et a1, a2 et a3 représentent des constantes de transformation qui sont calculées à partir de la représentation d'au moins trois marques $X_{M1}, X_{M2}$, et $X_{M3}$ de la règle graduée (12) sur une surface de projection (24) de l'analyseur, sous la forme $X'_{M1}, X'_{M2}$ et $X'_{M3}$, en résolvant le système d'équations:

$$X'_{Mj} = \frac{a_1 * X_{Mj} + a_2}{a_3 * X_{Mj} + 1}$$

où j indique le numéro d'ordre des marques sur l'analyseur (A1, A2, A3) dont les coordonnées sont mises dans le système d'équations et c est la constante de chambre, c'est-à-dire la distance entre la surface de projection (24) de l'analyseur et le centre de projection (O).

5. Méthode suivant l'une des revendications 1 à 4, caractérisée en ce que, sur le corps de positionnement (36) ou le corps de référence (38), sont analysées deux règles graduées parallèles (30, 32), qui sont dans un même plan, par des analyseurs (A1, A2) associés aux règles graduées.

6. Méthode suivant l'une des revendications 1 à 4, caractérisée en ce que, sur le corps de positionnement (36) ou le corps de référence (38), sont analysées deux règles graduées (30, 34) faisant de préférence un angle de 90° par des analyseurs (A1, A3) associés aux règles graduées.

7. Méthode suivant l'une des revendications 1 à 4, caractérisée en ce que, sur le corps de positionnement (36) ou le corps de référence (38), sont analysées trois règles graduées (30, 32, 34) dont deux (30, 32) sont dans un même plan et une troisième (34) fait de préférence un angle de 90° par rapport aux deux autres règles graduées (30, 32), par des analyseurs (Al, A2, A3) associés aux règles graduées.

8. Méthode suivant la revendication 7, caractérisée en ce que le calcul des coordonnées ainsi que de l'angle de rotation du corps de positionnement (36) par rapport au corps de référence (38) est effectué suivant les fonctions et équations suivantes:

$$X_{01} = \frac{\Delta_1 * (Z1_1{}^2 - Z2_1{}^2)}{(Z1_1 - Z2_1)^2 + \Delta_1{}^2}$$

$$X_{02} = \frac{\Delta_2 * (Z1_2{}^2 - Z2_2{}^2)}{(Z1_2 - Z2_2)^2 + \Delta_2{}^2}$$

$$Y_{03} = \frac{\Delta_3{}^2 * (Z1_3 + Z2_3)}{(Z1_3 - Z2_3)^2 + \Delta_3{}^2}$$

$$Z_{01} = \frac{\Delta_1{}^2 * (Z1_1 + Z2_1)}{(Z1_1 - Z2_1)^2 + \Delta_1{}^2}$$

$$Z_{02} = \frac{\Delta_2{}^2 * (Z1_2 + Z2_2)}{(Z1_2 - Z2_2)^2 + \Delta_2{}^2}$$

$$\rho = \text{arctg} \frac{X'_{Ml1} - X'_{H1}}{c_1} - \text{arctg} \frac{X_{Ml1} - X_{01}}{Z_{01}}$$

$$\ae = \text{arctg} \frac{X'_{Ml3} - X'_{H3}}{c_3} - \text{arctg} \frac{X_{Ml3} - X_{03}}{Z_{03}}$$

ou

$$\text{æ} = \text{arct}\, \frac{X_{02} - X_{01}}{\delta_{21}}$$

$$\omega = \text{arctg}\, \frac{Z_{02} - Z_{01}}{\delta_{21}}$$

où les indices 1, 2, 3 indiquent le premier, le deuxième et le troisième analyseur,
où

$$Z1_{1...3} = \frac{\Delta_{1...3}}{2 * \tan \alpha_{1...3}}$$

et

$$Z2_{1...3} = \frac{\Delta_{1...3}}{2 * \tan \beta_{1...3}}$$

$\alpha$ désigne l'angle de projection entre le centre de projection (O) ainsi qu'une première et une deuxième marques voisines (A, B), $\beta$ désigne l'angle de projection entre le centre de projection (O) et la première (A) ou la seconde (B) ainsi qu'une troisième marque voisine (C), $\Delta$ est la distance entre deux marques voisines, $X_{01}$, $X_{02}$, $Y_{03}$, $Z_{01}$ et $Z_{02}$ sont les coordonnées des centres de projection (O) de l'analyseur affecté de l'indice par rapport aux règles graduées, $\rho$ représente l'angle de rotation autour de l'axe Y, æ l'angle de rotation autour de l'axe Z et $\omega$ l'angle de rotation autour de l'axe X, et $\delta$ est la distance entre les centres de projection (O) des analyseurs affectés des indices.

9. Méthode suivant l'une des revendications 1 à 8, caractérisée en ce qu'une détermination grossière des coordonnées présentées dans la direction des règles graduées est préétablie par une réalisation en règle graduée incrémentée par les comptes de marques passées.

10. Méthode suivant l'une des revendications 1 à 8, caractérisée en ce qu'une estimation approximative des coordonnées présentées en direction des règles graduées est préétablie par une réalisation en règle graduée absolue par décodage des valeurs de coordonnées contenues codées dans les marques.

11. Dispositif de mise en oeuvre la méthode suivant la revendication 1, où un corps de positionnement (36) porte une règle graduée (12) avec des marques (A, B, C) de distance constante et un corps de référence (38) présente un analyseur (10; A1) avec une surface de projection 24 sur laquelle peuvent être projetées les marques (14; A, B, C) de la règle graduée (12), ainsi qu'une optique de projection (22) par lequel les coordonnées ($X_{01}$, $Z_{01}$) du centre de projection (O) de l'optique d'image (22) peuvent être calculées, par trigonométrie, à partir des angles de projection ($\alpha$, $\beta$) entre le centre de projection (O) et trois marques (A, B, C) sur la règle graduée (12) ainsi qu'à partir de la distance constante des marques (A, B, C), caractérisé en ce que l'analyseur (10; AI) est relié à un calculateur (18), en ce qu'à l'analyseur (10; A1) est adjoint un dispositif de mesure (26) au moyen duquel sont déterminés les angles de projection ($\alpha$, $\beta$) entre le centre de projection (O) et trois marques (A, B, C) sur la règle graduée et en ce qu'il calcule, par trigonométrie, les coordonnées du centre de projection (O) à partir des angles de projection ($\alpha$, $\beta$) entre le centre de projection et trois marques sur la règle graduée ainsi qu'à partir de la distance constante des marques et, de plus, de l'angle d'inclinaison $\rho$ du corps de positionnement (36) par rapport au corps de référence (38), par
   - les coordonnées moyennes ($X_{01}$, $Z_{01}$) du centre de projection (O),
   - la distance c du centre de projection (O) à la surface de projection (24) de l'analyseur (10; A1) et
   - les coordonnées d'image ($X'_H$), le pied de la verticale (H) du centre de projection (O) sur la surface de projection (24).

12. Dispositif de mise en oeuvre de la méthode suivant la revendication 3, où un corps de positionnement (36) porte une règle graduée (12) avec des marques équidistantes (14; A, B, C) et un corps de référence (38) présente un analyseur (10; AI) avec une surface de projection (24), sur laquelle peuvent être projetées les marques (14; A, B, C) de la règle graduée (12), ainsi qu'une optique de projection (22), dans lequel peuvent être calculées les coordonnées ($X_{01}$, $Z_{01}$) du centre de projection (o) de l'optique de projection (22) à partir d'une évaluation d'au moins trois marques (A, B, C) de la règle graduée (12), caractérisé en ce que l'analyseur (10; A1) est relié à un calculateur (18) qui est commandé de manière qu'en plus soit calculé l'angle d'inclinaison $\rho$ du corps de positionnement (36) par rapport au corps de référence (38) et soient effectués les calculs par l'affinité de projection entre le plan de projection (24) de l'analyseur (10; A1) et le plan de la règle graduée.

13. Dispositif suivant la revendication 11 ou 12, caractérisé en ce que, sur le corps de positionnement (36) ou le corps de référence (38) sont disposées deux règles graduées parallèles (30, 32) qui sont dans un même plan et en ce qu'à chaque règle graduée (30, 32) est adjoint un analyseur (A1, A2).

14. Dispositif suivant la revendication 11 ou 12, caractérisé en ce que, sur le corps de positionnement (36) ou le corps de référence (38) sont disposées deux règles graduées (30, 34) faisant de préférence un angle de 90°, et en ce qu'à chaque règle graduée (30, 34) est adjoint un analyseur (A1, A3).

15. Dispositif suivant la revendication 11 ou 12, caractérisé en ce que, sur le corps de positionnement (36) ou le corps de référence (38) sont disposées trois règles graduées (30, 32, 34) dont deux (30, 32) sont dans un même plan et une troisième (34) est dirigée de préférence suivant un angle de 90° par rapport aux deux autres règles graduées (30, 32) et en ce qu'à chaque règle graduée (30, 32, 34) est adjoint un analyseur (A1, A2, A3).

16. Dispositif suivant l'une des revendications 11 à 15, caractérisé en ce que les règles graduées (30, 32, 34) sont sous forme de règles graduées incrémentielles et qu'est effectuée une estimation approximative des coordonnées présentes dans la direction de la règle graduée par un compteur de marques.

17. Dispositif suivant l'une des revendication 11 à 16, caractérisé en ce que les règles graduées (30, 32, 34) sont sous forme de règles graduées absolues et en ce qu'est effectuée une estimation approximative des coordonnées présentes dans la direction des règles graduées par un décodeur qui décode les valeurs des coordonnées contenues codées dans les marques.

FIG.1

FIG.2

FIG.3

FIG.4

# FIG.5

# FIG.6

FIG. 7